# EUROPEAN PATENT APPLICATION

(11) **EP 4 760 960 A1**
(43) Date of publication of application: **17.06.2026**
(21) Application number: 25220710.5
(22) Date of filing: 04.12.2025
(51) Int. Cl.: H01M 50/503

(54) **BATTERY PACK**

(30) Priority: 11.12.2024 KR 20240183404
(71) Applicant: SK On Co., Ltd., Seoul 03161 (KR)
(72) Inventor: KWAK, Seung Il, 34124 Daejeon (KR); JIN, Shanshan, 34124 Daejeon (KR); JEON, Hae Ryong, 34124 Daejeon (KR); LEE, Jung Kwan, 34124 Daejeon (KR); PARK, Soo In, 13558 Gyeonggi-do (KR)
(74) Representative: Prüfer & Partner mbB Patentanwälte · Rechtsanwälte

(57) **Abstract**

Provided is a battery pack. The battery pack comprises a plurality of battery cells, and a bus bar configured to electrically connect the plurality of battery cells, wherein the bus bar comprises a first segment and a second segment that are alternately repeated in a longitudinal direction, and the first segment and the second segment are tilted in different directions.

## Description

### TECHNICAL FIELD

Embodiments of the present disclosure relate to generally to a battery pack.

### BACKGROUND

A secondary battery is one of the energy storage means which can be charged and discharged through electrochemical reactions. The secondary battery is used in various fields using electrical energy. For example, the secondary battery is widely used in the field of mobile devices such as mobile phones, notebooks, and tablets, and broader use is being explored in the field of transportation means such as vehicles, aircraft, and ships. In addition, demand for secondary batteries is increasing in the field of energy storage systems (ESSs) for utilizing surplus power.

A secondary battery may be provided in multiple combinations depending on the voltage, current, or the like required by a load. That is, the secondary battery may be provided as a single unit battery cell, or as one battery pack configured by combining a plurality of battery cells. In some cases, the battery cells may be combined into an intermediate unit such as a battery module, and a plurality of such battery modules may be combined to provide one battery pack. The battery pack may comprise a plurality of battery cells connected in series and/or in parallel depending on the voltage, current, or the like required by a load. A bus bar may be used for electrical connection between such battery cells.

### SUMMARY

Some embodiments of the present disclosure are directed to providing a battery pack.

Some embodiments of the present disclosure are also directed to providing a battery pack provided with a bus bar for electrical connection between battery cells.

Some embodiments of the present disclosure are also directed to providing a battery pack capable of effectively responding to external forces and vibrations applied to a bus bar from an external environment.

Some embodiments of the present disclosure are also directed to providing a battery pack capable of providing a reliable joint structure between a bus bar and battery cells.

Some embodiments of the present disclosure may be widely applied in the field of green technology such as an electric vehicle, a battery charging station, solar power generation, and wind power generation utilizing batteries. In addition, some embodiments of the present disclosure may be used in an eco-friendly electric vehicle (EV), a hybrid vehicle, and the like to prevent climate change by suppressing air pollution and greenhouse gas emissions.

According to an embodiment of the present disclosure, there is provided a battery pack comprising a plurality of battery cells, and a bus bar configured to electrically connect the plurality of battery cells, wherein the bus bar comprises a first segment and a second segment that are alternately repeated in a longitudinal direction, and the first segment and the second segment are tilted in different directions.

In some embodiments, the first segment may be tilted in a first rotational direction about a first tilting axis in the longitudinal direction, and the second segment may be tilted in a second rotational direction different from the first rotational direction about a second tilting axis in the longitudinal direction.

In some embodiments, the first segment may be formed to have a first tilting angle of 45° or less with respect to a reference plane defined in a horizontal direction, and the second segment may be formed, in a direction different from that of the first segment, to have a second tilting angle of 45° or less with respect to the reference plane.

In some embodiments, the first segment and the second segment may be formed as an integrated metal member having electrical conductivity.

In some embodiments, the first segment may comprise a first segment body, and a first segment extending portion comprising a first connection end portion connected to an electrode terminal of a first battery cell and branched from the first segment body toward the first battery cell.

In some embodiments, the second segment may comprise a second segment body formed to extend from the first segment body, and a second segment extending portion comprising a second connection end portion connected to an electrode terminal of a second battery cell and branched from the second segment body toward the second battery cell.

In some embodiments, each of the battery cells may be provided in a cylindrical shape having a predetermined diameter and a predetermined height, the plurality of battery cells may be disposed in a densely packed structure, and the bus bar may be formed to extend in a zigzag shape such that the longitudinal direction of the first segment and the longitudinal direction of the second segment intersect each other.

In some embodiments, each of the battery cells may comprise a first electrode terminal provided in a central region of an upper surface thereof and a second electrode terminal provided in a remaining region of the upper surface thereof, the first segment may be electrically connected to the first electrode terminal or the second electrode terminal of a first battery cell, and the second segment may be electrically connected to the first electrode terminal or the second electrode terminal of a second battery cell.

In some embodiments, the battery pack may further comprise an adhesive injected and cured around the plurality of battery cells.

In some embodiments, at least portions of the first segment and the second segment may be disposed and supported inside the adhesive.

In some embodiments, spaces for introduction of the adhesive may be formed between an installation surface on which the bus bar is disposed and the first segment and the second segment.

In some embodiments, a portion of the adhesive may be introduced into a first space between the first segment and an installation surface and cured, and another portion of the adhesive may be introduced into a second space between the second segment and the installation surface and cured.

In some embodiments, a cutout portion may be provided between the first segment and the second segment.

In some embodiments, the cutout portion may comprise a notch or a slit formed by partially cutting an end portion of the bus bar in a width direction.

According to another embodiment of the present disclosure, there is provided a bus bar of a battery pack, comprising a first segment electrically connected to one of a plurality of battery cells and tilted in a first rotational direction about a first tilting axis in a longitudinal direction, and a second segment electrically connected to another one of the plurality of battery cells and tilted in a second rotational direction different from the first rotational direction about a second tilting axis in the longitudinal direction.

### BRIEF DESCRIPTION OF THE DRAWINGS

The above and other objects, features, and other advantages of the embodiments of the present disclosure will be more clearly understood from the following detailed description taken in conjunction with the accompanying drawings, in which:
FIG. 1 is a schematic exploded perspective view of a battery pack according to an embodiment of the present disclosure;
FIG. 2 is a schematic enlarged plan view illustrating a bus bar shown in FIG. 1;
FIG. 3 is a schematic perspective view of the bus bar shown in FIG. 2;
FIG. 4 is a schematic cross-sectional view of a first segment shown in FIG. 3;
FIG. 5 is a schematic cross-sectional view of a second segment shown in FIG. 3;
FIG. 6 is a schematic front view illustrating an arrangement configuration of the bus bar shown in FIG. 3;
FIG. 7 is a schematic plan view illustrating another embodiment of the bus bar shown in FIG. 2; and
FIG. 8 is a schematic perspective view of the bus bar shown in FIG. 7.

### DETAILED DESCRIPTION

Hereinafter, the embodiments of the present disclosure will be described in detail with reference to the accompanying drawings. However, this is merely illustrative, and the embodiments of the present disclosure are not limited to the specific embodiments described.

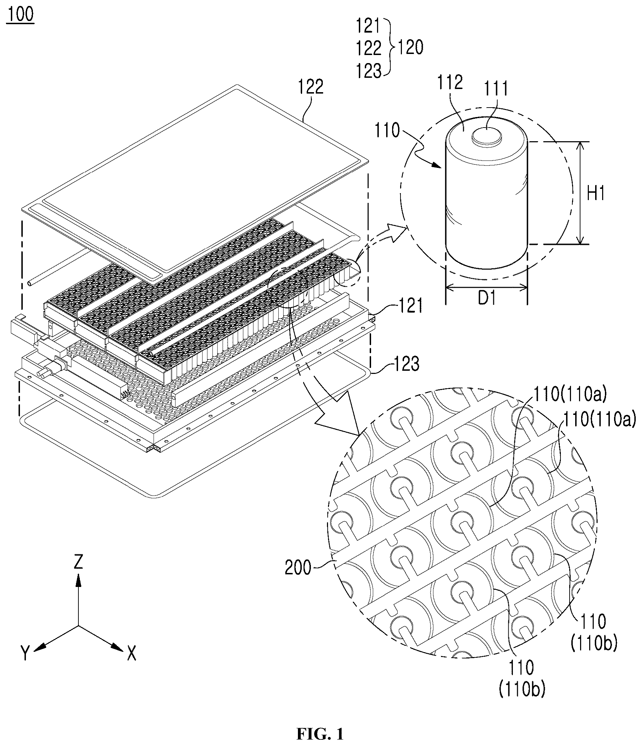

FIG. 1 is a schematic exploded perspective view of a battery pack according to an embodiment of the present disclosure.

For convenience, hereinafter, based on the coordinate axes shown in FIG. 1, an X-axis direction is referred to as a left-right direction, a Y-axis direction is referred to as a front-rear direction, and a Z-axis direction is referred to as an up-down direction.

Referring to FIG. 1, in some embodiments, a battery pack 100 may comprise a plurality of battery cells 110. In some embodiments, each of the battery cells 110 may have a cylindrical shape having a predetermined diameter D1 and a predetermined height H1. For example, in an embodiment, the battery cell 110 may have a diameter of 46 mm and a height of 80 mm. The battery cell 110 having such form factor may be referred to as a "4680 battery." In another embodiment, the battery cell 110 may have a diameter of 46 mm and a height of 80 mm, 95 mm, or 110 mm. The battery cell 110 having such a form factor may be referred to as a "46xx battery" wherein in the "46xx" the "xx" represents the height of the form factor. In still another embodiment, the battery cell 110 may have a diameter of 48 mm and a height of 75 mm, 80 mm, or 110 mm, and the battery cell 110 having such form factor may be referred to as a "48xx battery" with the "xx" part representing the height of the form factor. However, in various other embodiments of the present disclosure, the diameter D1 and the height H1 of the battery cell 110 may be variously modified and the batteries employed in the battery pack 100 may not necessarily limited only to the above embodiments.

According to the present disclosure, the battery cell 110 may have a cylindrical shape as illustrated in the embodiment of FIG. 1, however, it is noted that in the various embodiments of the present disclosure, the form factor of the battery cell 110 is not necessarily limited to the illustrated embodiments. The battery pack 100 according to embodiments of the present disclosure may be implemented or applied using battery cells 110 of a coin type, prismatic shape, pouch type, or other non-standardized shapes, as long as the battery cells 110 fall within the scope of the described technical concepts.

In some embodiments, the battery cell 110 may comprise a first electrode terminal 111 and a second electrode terminal 112. The first electrode terminal 111 may be provided as a positive electrode terminal or a negative electrode terminal, and the second electrode terminal 112 may be provided as a negative electrode terminal or a positive electrode terminal corresponding thereto. For convenience, in the present disclosure, the first electrode terminal 111 is described as a positive electrode terminal, and the second electrode terminal 112 is described as a negative electrode terminal.

In some embodiments as illustrated in FIG. 1, the first electrode terminal 111 and the second electrode terminal 112 may be provided on the same surface (or face) of the battery cell 110. For example, as illustrated in the embodiment of FIG. 1, both the first electrode terminal 111 and the second electrode terminal 112 may be provided on an upper surface (also referred to as the top face) of the battery cell 110. In addition, the first electrode terminal 111 may be provided in a central region of the upper surface of the battery cell 110, and the second electrode terminal 112 may be provided in the remaining region (an edge region of the central region) of the upper surface except for the central region.

In some embodiments, the battery pack 100 may comprise a pack housing 120. The pack housing 120 may accommodate the plurality of battery cells 110 therein. The pack housing 120 may be provided in various forms depending on factors such as the shape of a space in which the battery pack 100 is installed, the arrangement of the battery cells 110 inside the housing, and other design conditions. For example, the physical space where the battery pack is placed may vary and thus, the shape of that space affects how the battery pack housing (the outer shell that accommodates the battery cells) needs to be designed. For an electric car, as an example, the battery pack might need to fit under the floor or between the seats. That space could be flat, long, and wide. In the illustrated embodiment of FIG. 1, the pack housing 120 is in the form of a flat housing that accommodates the plurality of battery cells 110 disposed in a single layer. The pack housing 120 having such a form may be particularly suitable for an electric vehicle battery pack.

However, the form of the pack housing 120 may be variously modified as needed and is not necessarily limited to the illustrated embodiments. In addition, in some cases, the pack housing 120 may be partially or entirely embedded or integrated into an installation target of the battery pack 100. For example, the pack housing 120 may be partially or entirely embedded or integrated into a vehicle body or chassis. In some cases, such embedding or integration of the pack housing 120 may be referred to as cell to body (CTB) or cell to chassis (CTC) in the industry.

In some embodiments, the pack housing 120 may comprise a frame assembly 121, an upper cover assembly 122, and a lower cover assembly 123. The frame assembly 121 may form an overall outer shape of the pack housing 120 and may have a space in which the plurality of battery cells 110 can be disposed. The upper cover assembly 122 and the lower cover assembly 123 may be respectively fastened to upper and lower portions of the frame assembly 121 to seal the interior of the frame assembly 121. Although not described in detail, the pack housing 120 may further comprise various components for cooling, insulating, controlling, and mechanically coupling the battery cells 110, such as a cooling plate, an insulating sheet, a sensor assembly, and a control unit.

In some embodiments, the battery pack 100 may comprise a bus bar 200. The bus bar 200 may be provided to electrically connect the plurality of battery cells 110. That is, the plurality of battery cells 110 may be connected in series and/or in parallel by the bus bar 200. However, a specific electrical connection form of the plurality of battery cells 110 may be appropriately selected depending on the voltage, current, or the like required by a load, and the battery pack 100 according to the embodiments of the present disclosure is not particularly limited to the specific electrical connection form.

In some embodiments, a plurality of bus bars 200 may be provided. In addition, at least some of the plurality of bus bars 200 may be provided to electrically connect corresponding plurality of battery cells 110 in parallel. For example, in the illustrated embodiment, one bus bar 200 extending in the front-rear direction may be connected to first electrode terminals 111 of battery cells 110a arranged in a left row, thereby electrically connecting the corresponding battery cells 110a to be connected in parallel. In addition, the bus bar 200 may be connected to second electrode terminals 112 of battery cells 110b arranged in a right row, thereby electrically connecting the corresponding battery cells 110a and 110b to be connected in parallel. The parallel connection may increase the total capacity (more energy storage) and also keep the voltage the same, which may be useful for devices that need a specific voltage level.

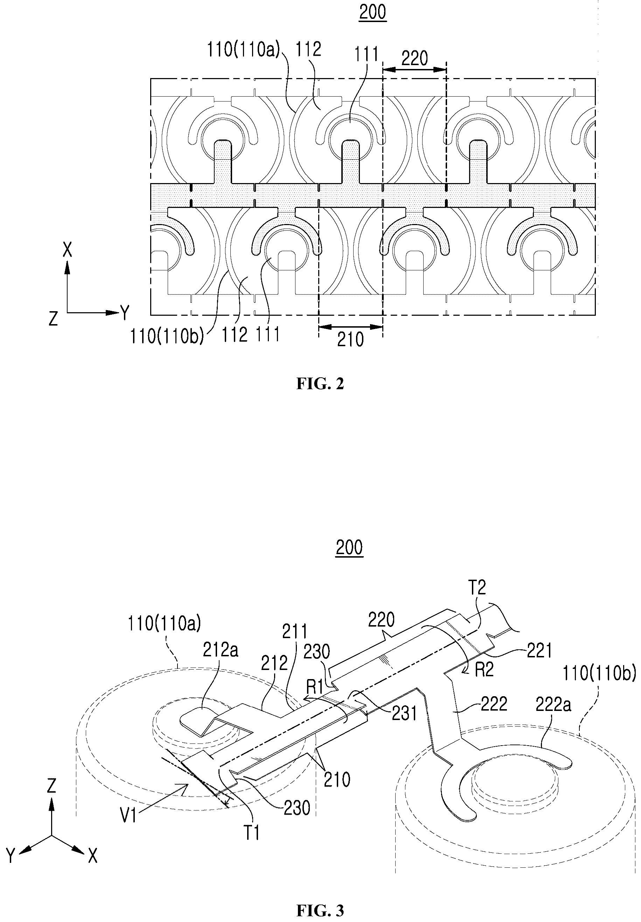

FIG. 2 is a schematic enlarged plan view illustrating the bus bar of FIG. 1 in more detail.

Referring to FIG. 2, in some embodiments, the plurality of battery cells 110 may be disposed in the front-rear and left-right directions in a plan view. The plurality of battery cells 110 disposed side by side in the front-rear direction (Y-axis direction) may form one row, and a plurality of such rows may be disposed in the left-right direction (X-axis direction).

In some embodiments, the plurality of battery cells 110 may be disposed in a densely packed structure in a plan view. The densely packed structure refers to a structure in which three battery cells 110 are disposed to correspond to vertices of an equilateral triangle in a plan view. In general, the above-described densely packed structure may serve to reduce dead space between the cylindrical battery cells 110.

FIG. 3 is a schematic perspective view of the bus bar shown_in FIG. 2.

Referring to FIG. 3, in some embodiments, the battery pack 100 may comprise the plurality of battery cells 110 and the bus bar 200 electrically connecting the plurality of battery cells 110. Here, the bus bar 200 may be provided such that first segments 210 and second segments 220 are alternately repeated in a longitudinal direction. The first segments 210 and the second segments 220 may be provided to be tilted in different directions.

Specifically, in some embodiments, the bus bar 200 may comprise the first segments 210 and the second segments 220. The bus bar 200 may be formed to extend in the longitudinal direction, and the first segments 210 may be provided as a partial region of the bus bar 200 in the longitudinal direction. In addition, the second segments 220 may be provided as another partial region of the bus bar 200 in the longitudinal direction.

In some embodiments, the first segments 210 and the second segments 220 may be alternately and repeatedly disposed in the longitudinal direction of the bus bar 200. For example, when moving along one side of the bus bar 200 in the longitudinal direction, the first segments 210 and the second segments 220 may be alternately and repeatedly disposed, for example, in the order of the first segment 210, the second segment 220, the first segment 210, and the second segment 220. Hence, according to this embodiment, the segments alternate one by one in a repeating sequence, for example: 210 → 220 → 210 → 220 → .... This is a uniform pattern where each first segment is immediately followed by a second segment, and so on.

In another embodiment, although not illustrated, the plurality of first segments 210 and the plurality of second segments 220 may be alternately and repeatedly disposed. That is, when moving along one side of the bus bar 200 in the longitudinal direction, one or more of the first segments 210 may be disposed, and then one or more of the second segments 220 may be disposed, such that the first segments 210 and the second segments 220 are alternately and repeatedly disposed. Hence, the segments may also be grouped in pluralities (more than one), and these groups alternate, for example: 210 → 210 → 220 → 220 → 210 → 210 → .... This embodiment allows multiple first segments followed by multiple second segments, still in an alternating fashion.

In the above, the first segments 210 and the second segments 220 may be tilted in different directions. Here, the tilting may refer to a state in which each of the segments 210 and 220 is disposed to be rotated by a predetermined angle about an axis in the longitudinal direction. Specifically, the first segment 210 may comprise a first tilting axis T1 corresponding to the longitudinal direction, and may be tilted by a predetermined angle in a first rotational direction R1 about the first tilting axis T1. For example, in the illustrated embodiment, the first segment 210 is tilted by a predetermined angle in a counterclockwise direction R1 about the first tilting axis T1. Similarly, the second segment 220 may comprise a second tilting axis T2 corresponding to the longitudinal direction, and may be tilted by a predetermined angle in a second rotational direction R2 about the second tilting axis T2. Here, the second rotational direction R2 may be formed in a direction different from the first rotational direction R1. For example, in the illustrated embodiment, the second segment 220 is tilted by a predetermined angle in a clockwise direction R2 about the second tilting axis T2.

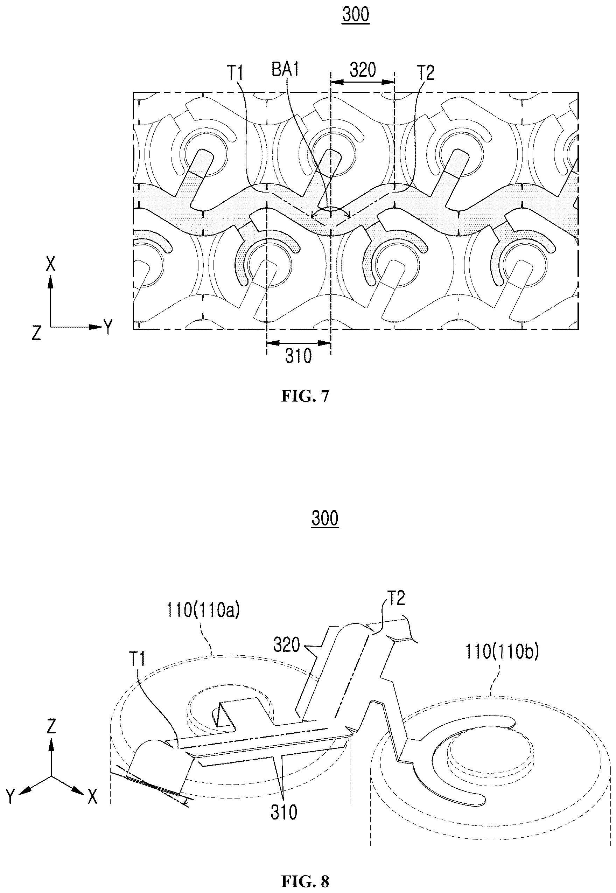

In the above, the first tilting axis T1 and the second tilting axis T2 may be provided as virtual axes disposed on an XY plane. In addition, the first tilting axis T1 and the second tilting axis T2 may be disposed to be parallel to each other, or may be disposed to intersect each other at a predetermined angle. For example, in the embodiment illustrated with reference to FIG. 3, the first tilting axis T1 and the second tilting axis T2 are disposed in parallel on a straight line, and in an embodiment illustrated with reference to FIG. 7, which will be described below, the first tilting axis T1 and the second tilting axis T2 are disposed to intersect each other at a predetermined angle. Hence, the first and second segments 210 and 220 are tilted in opposite directions, for example, counterclockwise and clockwise respectively. The tilting refers to a small rotation around the longitudinal axis of the bus bar 200.

In some embodiments, the first segments 210 and the second segments 220 as described above may be formed as an integrated metal member having electrical conductivity. That is, the bus bar 200 may be formed by processing an integrated metal member into a shape corresponding to the first segments 210 and the second segments 220. For example, the bus bar 200 may be provided by pressing a single metal plate into the illustrated shape. In addition, the bus bar 200 may be formed of an electrically conductive metal member, such as aluminum or copper.

In some embodiments, each of the first segments 210 may comprise a first segment body 211 and a first segment extending portion 212. The first segment body 211 may be formed to extend in the longitudinal direction along the first tilting axis T1, and the first segment extending portion 212 may be formed to branch and extend from the first segment body 211. In the illustrated embodiment, the first segment extending portion 212 is formed to extend in a direction substantially perpendicular to the longitudinal direction of the first segment body 211. In addition, the first segment extending portion 212 may comprise a first connection end portion 212a at its end, and the first connection end portion 212a may be connected to the first electrode terminal 111 or the second electrode terminal 112 of the battery cell 110. For convenience, in the present disclosure, the battery cell 110 connected to the first connection end portion 212a will be referred to as a first battery cell 110a. In the illustrated embodiment, the first connection end portion 212a is connected to the first electrode terminal 111 of the first battery cell 110a.

Similarly to the above, in some embodiments, each of the second segments 220 may comprise a second segment body 221 and a second segment extending portion 222. The second segment body 221 may be formed to extend along the second tilting axis T2, and the second segment extending portion 222 may branch from the second segment body 221. In addition, the second segment extending portion 222 may comprise a second connection end portion 222a at its end, and the second connection end portion 222a may be brought into contact with the first electrode terminal 111 or the second electrode terminal 112 of another battery cell 110. For convenience, in the present disclosure, the battery cell 110 connected to the second connection end portion 222a will be referred to as a second battery cell 110b. In addition, in the illustrated embodiment, the second connection end portion 222a is connected to the second electrode terminal 112 of the second battery cell 110b.

In some embodiments, the first connection end portion 212a and the second connection end portion 222a may have different shapes corresponding to the shapes of the electrode terminals 111 and 112, respectively. For example, in the illustrated embodiment, the first connection end portion 212a is provided in the form of a metal plate that is slightly smaller than the first electrode terminal 111 to be connected to the first electrode terminal 111 circularly provided at the center of an upper surface of the first battery cell 110a. This size difference may ensure a secure and precise contact area, allowing efficient electrical conduction while minimizing the risk of misalignment or short-circuiting. The second connection end portion 222a is provided in the form of a substantially semicircular metal plate so as to be connected to the second electrode terminal 112 provided at an edge region of an upper surface of the second battery cell 110b. This semicircular shape allows the second connection end portion 222a to conform closely to the curved edge of the second electrode terminal 112, ensuring stable contact and efficient current flow while accommodating the spatial constraints of the cell layout. It is noted however, that the specific shapes of the first connection end portion 212a and the second connection end portion 222a may be modified in various ways as needed and are not necessarily limited to the illustrated embodiments. For example, the first connection end portion 212a and the second connection end portion 222a may be provided in similar shapes to each other, and may be modified in various ways, for example, such that only connection positions with the respective battery cells 110a and 110b are differently implemented.

In some embodiments, a cutout portion 230 may be provided between the first segment 210 and the second segment 220. Specifically, in the illustrated embodiment, a right end of the first segment 210 may be connected to the second segment 220 through a segment connection portion 231, and the cutout portion 230 may be formed in the segment connection portion 231. The cutout portion 230 may assist in more appropriately realizing the tilting shapes of the respective segments 210 and 220 between the first segment 210 tilted in the first rotational direction R1 and the second segment 220 tilted in the second rotational direction R2.

In some embodiments, the cutout portion 230 may be formed in the shape of a notch or slit. For example, the notch may be provided such that an end portion of the segment connection portion 231 in a width direction is cut in a V-shape or the like. In addition, the slit may be provided such that the end portion of the segment connection portion 231 in the width direction is partially cut. In addition, such notches or slits may be symmetrically provided on left and right sides of the segment connection portion 231 in the width direction. In some cases, the cutout portion 230 may be provided in the form of a groove in which side surfaces of the segment connection portion 231 are recessed toward the center in the width direction, or may be provided in a form in which a width of the bus bar 200 is partially reduced in the region of the segment connection portion 231.

In some embodiments, the segment connection portion 231 having the cutout portion 230 as described above may serve as a fuse that responds to an overcurrent. Alternatively, in some embodiments, some of the plurality of segment connection portions 231 may be provided with relatively larger cutout portions 230, and the segment connection portions 231 having the cutout portions 230 may serve as fuses where disconnection is induced in response to an overcurrent.

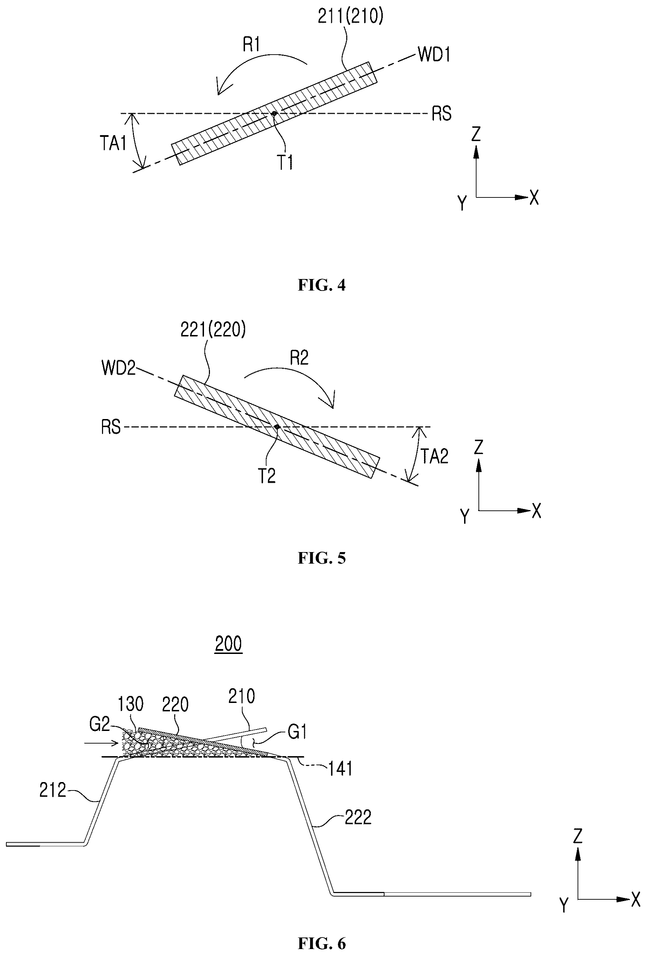

FIG. 4 is a schematic cross-sectional view of the first segment shown in FIG. 3. FIG. 5 is a schematic cross-sectional view of the second segment shown in FIG. 3.

Referring to FIGS. 4 and 5, in some embodiments, the first segment 210 may have a first tilting angle TA1. The first tilting angle TA1 may refer to an angle between a width direction WD1 of the first segment 210 and a reference surface RS defined with respect to a horizontal direction. Similarly, the second segment 220 may have a second tilting angle TA2. The second tilting angle TA2 may refer to an angle formed between a width direction WD2 of the second segment 220 and the reference surface RS defined with respect to the horizontal direction. As described above, the first tilting angle TA1 and the second tilting angle TA2 may be formed in different directions.

In some embodiments, the first tilting angle TA1 and the second tilting angle TA2 may be formed to have the same magnitude. For example, the first tilting angle TA1 may be defined as an acute angle greater than 0° and less than 90° tilted in the counterclockwise direction with respect to the reference surface RS, and the second tilting angle TA2 may be defined as an acute angle greater than 0° and less than 90° tilted in the clockwise direction with respect to the reference surface RS. The symmetrical tilting shape may assist in stably securing the bus bar in the adhesive. In some embodiments, the first tilting angle TA1 and the second tilting angle TA2 may each be formed at an angle of 45° or less. The first tilting angle TA1 and the second tilting angle TA2 may have advantages in terms of ease of processing while maintaining functional characteristics of the bus bar 200, as will be described below.

FIG. 6 is a schematic front view illustrating an arrangement configuration of the bus bar shown in FIG. 3.

FIG. 6 schematically illustrates an arrangement configuration of the bus bar as viewed in the direction of V1 indicated in FIG. 3. Referring to FIG. 6, the bus bar 200 may be disposed to be seated on an installation surface 141 provided above the battery cells 110. In addition, the first segment 210 and the second segment 220 may be in contact with and supported by the installation surface 141. For reference, although not illustrated, the installation surface 141 may be provided by an installation bracket disposed above the battery cells 110. The installation bracket may encompass structures such as a bracket, a frame, and a sheet disposed above the battery cells 110 for arranging and insulating the bus bar 200.

In some embodiments, the battery pack 100 may further comprise an adhesive 130. The adhesive 130 may be injected around the battery cells 110 and the bus bar 200 for fixing and insulating the battery cells 110 and the bus bar 200. In some embodiments, the adhesive 130 may be provided to be cured around the battery cells 110 and the bus bar 200 after being injected in a liquid resin form. In addition, the battery cells 110 and the bus bar 200 may be disposed in the adhesive 130 cured as described above. For convenience of illustration, the adhesive 130 is omitted in FIG. 3 and other drawings described above.

The first segment 210 and the second segment 220 may be disposed in the adhesive 130 and may be supported and assisted by the adhesive 130. That is, the adhesive 130 may be injected in a liquid resin form and may flow around the first and second segments 210 and 220. The adhesive 130 may be cured around the first and second segments 210 and 220 to support and fix the first and second segments 210 and 220. The adhesive 130 may serve to limit unintended electrical short circuits between the first and second segments 210 and 220 and the battery cells 110, and may also serve to mechanically secure the first and second segments 210 and 220 against external forces or vibrations according to the usage environment. In some embodiments, the adhesive 130 may act as both an electrical insulator and mechanical support, and may be added around the first and second segments 210 and 220 in liquid form and then cured to prevent short circuits and secure the first and second segments against external forces or vibrations. For example, the adhesive 130 may include an epoxy, a polyurethane, or a silicone.

In the above, the bus bar 200 may be supported and fixed in a more stable form within the adhesive 130, as the first segment 210 and the second segment 220 are tilted in different directions. That is, the first segment 210 and the second segment 220 tilted in different directions may provide supporting surfaces against external forces applied in various directions inside the adhesive 130. Accordingly, the bus bar 200 may be supported and fixed more firmly inside the adhesive 130. For example, the first segment 210 and the second segment 220, which are tilted in different directions, may be disposed to form inclined surfaces inside the adhesive 130. Accordingly, the bus bar 200 may be effectively supported against external forces in one direction (a left direction in the drawing) and the opposite direction (a right direction in the drawing) along the X-axis direction. In addition, the segment connection portion 231 and the cutout portion 230 provided between the first segment 210 and the second segment 220 may provide a supporting structure against external forces in the Y-axis direction inside the adhesive 130. Accordingly, the bus bar 200 may properly maintain its initial assembly position inside the adhesive 130 despite external forces or vibrations applied to the battery pack 100. This allows the battery pack 100 to function more effectively under environments in which continuous external forces or vibrations are present, such as in vehicles.

Moreover, in some embodiments, the first segment 210 and the second segment 220 as described above may contribute to realizing a more complete bonding between the adhesive 130 and the bus bar 200. Specifically, the bus bar 200 may be disposed to be seated on the installation surface 141 provided above the battery cells 110. Here, the first segment 210 and the second segment 220 disposed on the installation surface 141 may form predetermined spaces with the installation surface 141 according to their tilted shapes. That is, with reference to the drawing of FIG. 6, a first space G1 may be formed between the installation surface 141 and a bottom surface of the first segment 210, and a second space G2 may be formed between the installation surface 141 and a bottom surface of the second segment 220. In addition, the first space G1 may be provided as a space that is open toward a right side and gradually narrows from the open right side toward a left side opposite thereto. Similarly, the second space G2 may be provided as a space that is open toward the left side and gradually narrows from the open left side toward the opposite right side. In addition, the adhesive 130 may be introduced into the first and second spaces G1 and G2 and may be cured therein.

The first and second spaces G1 and G2 as described above may be provided as spaces that gradually narrow inward from entrance portions according to the tilted shapes of the first segment 210 and the second segment 220. Accordingly, the adhesive 130 may be more smoothly guided to flow into the first and second spaces G1 and G2. For reference, FIG. 6 illustratively shows the adhesive 130 flowing into the second space G2 on the left side. In addition, the adhesive 130 introduced in this manner may be cured in the first and second spaces G1 and G2, so that the bus bar 200 may be bonded and fixed more completely within the adhesive 130.

FIG. 7 is a schematic plan view illustrating another embodiment of the bus bar shown in FIG. 2. FIG. 8 is a schematic perspective view of the bus bar shown in FIG. 7.

For convenience, the following description will focus on differences from the above-described embodiment.

Referring to FIGS. 7 and 8, in some embodiments, a bus bar 300 may be formed to extend in a zigzag shape. Specifically, the bus bar 300 may be formed such that a longitudinal direction of a first segment 310 and a longitudinal direction of a second segment 320 intersect with each other, and the first and second segments 310 and 320 are alternately repeated, thereby being formed to extend in a zigzag shape in a plan view. That is, when described with reference to a first tilting axis T1 and a second tilting axis T2, the bus bar 300 may be formed to extend in a zigzag shape in a plan view while the first tilting axis T1 and the second tilting axis T2 form a predetermined angle BA1 with each other. For example, the angle BA1 may be an angle greater than 90° and less than 180°. According to this embodiment, the bus bar 300 is designed with alternating segments that change direction at each junction, creating a zigzag pattern when viewed from above. Each segment - the first segment 310 and the second segment 320 - is angled relative to the previous one, so their longitudinal axes intersect at an angle (BA1) between 90° and 180°, giving the entire bus bar a folded, zigzag appearance across the plane.

In some embodiments, the first segment 310 and the second segment 320 as described above may be tilted in different directions and may be disposed inside an adhesive. Accordingly, the bus bar 300 may be supported and fixed within the adhesive. In addition, the shape of the bus bar 300 extending in a zigzag form may contribute to improving support and fixing force within the adhesive.

According to another embodiment of the present disclosure, the bus bars 200 and 300 for electrically connecting the plurality of battery cells 110 may be provided

For example, in some embodiments, the bus bars 200 and 300 may respectively comprise the first segments 210 and 310, which are electrically connected to some battery cells 110a among the plurality of battery cells 110 and are tilted in the first rotational direction R1 about the first tilting axis T1 in the longitudinal direction, and the second segments 220 and 320 that are electrically connected to other battery cells 110b among the plurality of battery cells 110 and are tilted in the second rotational direction R2 different from the first rotational direction R1 about the second tilting axis T2 in the longitudinal direction. Since the bus bars 200 and 300 have already been described through the above embodiments, a more detailed description thereof will be omitted.

As described above, the embodiments of the present disclosure may provide a battery pack.

In addition, in some embodiments of the present disclosure, at least one bus bar may be provided, and such a bus bar may be provided to electrically connect a plurality of battery cells. Accordingly, the battery pack may be configured such that the plurality of battery cells are appropriately electrically connected according to requirements of a load and the like

In addition, some embodiments of the present disclosure may comprise a bus bar having a first segment and a second segment, which are configured to be tilted in different directions. The first and second segments tilted in different directions as described above may more effectively respond to external forces applied to the bus bar from various directions. That is, the first segment and the second segment as described above may provide supporting surfaces in more diverse directions within the adhesive. This may help maintain the arrangement state of the bus bar against continuous external forces or vibrations applied to the battery pack.

In addition, in some embodiments of the present disclosure, the bus bar may be more completely and stably supported within the adhesive through the first segment and the second segment as described above. Accordingly, joint portions of the bus bar may be appropriately maintained and protected from external forces or vibrations according to the usage environment. For example, joint portions between the bus bar and the battery cells and joint portions between the bus bar and another adjacent bus bar may be appropriately protected from repetitive external forces or vibrations. This may contribute to improvement of long-term durability and operational quality of the battery pack.

Some embodiments of the present disclosure can provide a battery pack.

In addition, some embodiments of the present disclosure can provide a battery pack provided with a bus bar for electrical connection between battery cells.

In addition, some embodiments of the present disclosure can provide a battery pack capable of effectively responding to external forces and vibrations applied to a bus bar from an external environment.

In addition, some embodiments of the present disclosure can provide a battery pack capable of providing a reliable joint structure between a bus bar and battery cells.

Some of the aspects of the present disclosure are as follows:
Aspect 1: A battery pack comprising: a plurality of battery cells 110; and a bus bar 200 configured to electrically connect the plurality of battery cells 110, wherein the bus bar 200 comprises a first segment 210 and a second segment 220 that are alternately repeated in a longitudinal direction, and wherein the first segment 210 and the second segment 220 are tilted in different directions.
Aspect 2: The battery pack of aspect 1, wherein the first segment 210 is tilted in a first rotational direction about a first tilting axis in the longitudinal direction, and wherein the second segment 220 is tilted in a second rotational direction different from the first rotational direction about a second tilting axis in the longitudinal direction.
Aspect 3: The battery pack according to any one of the preceding aspects, wherein the first segment 210 is formed to have a first tilting angle of 45° or less with respect to a reference plane defined in a horizontal direction, andwherein the second segment 220 is formed in a direction different from that of the first segment 210 to have a second tilting angle of 45° or less with respect to the reference plane.
Aspect 4: The battery pack according to any one of the preceding aspects, wherein the first segment 210 and the second segment 220 are formed as an integrated metal member having electrical conductivity.
Aspect 5: The battery pack according to any one of the preceding aspects, wherein the first segment 210 comprises:a first segment body 211; anda first segment extending portion 212 comprising a first connection end portion 212a connected to an electrode terminal of a first battery cell 110a and branched from the first segment body 211 toward the first battery cell 110a.
Aspect 6: The battery pack according to any one of the preceding aspects, wherein the second segment 220 comprises: a second segment body 221 formed to extend from the first segment body 211; and a second segment extending portion 222 comprising a second connection end portion 222a connected to an electrode terminal of a second battery cell 110b and branched from the second segment body 221 toward the second battery cell 110b.
Aspect 7: The battery pack according to any one of the preceding aspects, wherein each of the battery cells 110 is provided in a cylindrical shape having a predetermined diameter and a predetermined height, wherein the plurality of battery cells 110 are disposed in a densely packed structure, and wherein the bus bar 200 is formed to extend in a zigzag shape such that the longitudinal direction of the first segment 210 and the longitudinal direction of the second segment 220 intersect each other.
Aspect 8: The battery pack according to any one of the preceding aspects, wherein each of the battery cells 110 comprises a first electrode terminal 111 provided in a central region of an upper surface thereof and a second electrode terminal 112 provided in a remaining region of the upper surface thereof, wherein the first segment 210 is electrically connected to the first electrode terminal 111 or the second electrode terminal 112 of a first battery cell 110a, and wherein the second segment 220 is electrically connected to the first electrode terminal 111 or the second electrode terminal 112 of a second battery cell 110b.
Aspect 9: The battery pack according to any one of the preceding aspects, further comprising an adhesive 130 injected and cured around the plurality of battery cells 110.
Aspect 10: The battery pack according to any one of the preceding aspects, wherein at least portions of the first segment 210 and the second segment 220 are disposed and supported inside the adhesive 130.
Aspect 11: The battery pack according to any one of the preceding aspects, wherein spaces for introduction of the adhesive 130 are formed between an installation surface on which the bus bar 200 is arranged and the first segment 210 and the second segment 220.
Aspect 12: The battery pack according to any one of the preceding aspects, wherein a portion of the adhesive 130 is introduced into a first space between the first segment 210 and an installation surface and cured, and wherein another portion of the adhesive 130 is introduced into a second space between the second segment 220 and the installation surface and cured.
Aspect 13: The battery pack according to any one of the preceding aspects, wherein a cutout portion 230 is provided between the first segment 210 and the second segment 220.
Aspect 14: The battery pack according to any one of the preceding aspects, wherein the cutout portion 230 comprises a notch or slit formed by partially cutting an end portion of the bus bar 200 in a width direction.
Aspect 15: A bus bar of a battery pack, the bus bar comprising: a first segment 210 electrically connected to one of a plurality of battery cells 110 and tilted in a first rotational direction about a first tilting axis in a longitudinal direction; and a second segment 220 electrically connected to another one of the plurality of battery cells 110 and tilted in a second rotational direction different from the first rotational direction about a second tilting axis in the longitudinal direction.
Aspect 16: The bus bar according to any one of the preceding aspects, wherein the first segment and the second segment are alternately and repeatedly disposed in the longitudinal direction of the bus bar.
Aspect 17: The bus bar according to any one of the preceding aspects,, wherein the first segment and the second segment are provided as an integrated metal member having electrical conductivity, and wherein a cutout portion is provided between the first segment and the second segment.
Aspect 18: A battery pack comprising: a bus bar configured to electrically connect with a first plurality of battery cells accommodated in a first row to the left of the bus bar and with a second plurality of battery cells accommodated to the right of the bus bar within a housing of the battery pack, wherein the bus bar comprises: first and second segments alternating in a one to one alternating sequence, the first segments being electrically connected to the first battery cells and the second segments being electrically connected to the second battery cells; and an adhesive filling the space between the bus bar and the first and second plurality of the battery cells.
Aspect 19: The battery pack according to any one of the preceding aspects, wherein the first and second segments are tilted in opposite directions.
Aspect 20: The battery pack according to any one of the preceding aspects, wherein a longitudinal direction of the first segment and a longitudinal direction of the second segment intersect each other to a form a zigzag shape.

The above embodiments illustrate applying the principles of the present disclosure, and other embodiments may be further comprised without departing from the scope of the present disclosure. Furthermore, the embodiments may be combined to form additional embodiments.

## Claims

1. A battery pack comprising:
a plurality of battery cells 110; and
a bus bar 200 configured to electrically connect the plurality of battery cells 110,
wherein the bus bar 200 comprises a first segment 210 and a second segment 220 that are alternately repeated in a longitudinal direction, and
wherein the first segment 210 and the second segment 220 are tilted in different directions.

2. The battery pack of claim 1, wherein the first segment 210 is tilted in a first rotational direction about a first tilting axis in the longitudinal direction, and
wherein the second segment 220 is tilted in a second rotational direction different from the first rotational direction about a second tilting axis in the longitudinal direction.

3. The battery pack according to any one of the preceding claims, wherein the first segment 210 is formed to have a first tilting angle of 45° or less with respect to a reference plane defined in a horizontal direction, and
wherein the second segment 220 is formed in a direction different from that of the first segment 210 to have a second tilting angle of 45° or less with respect to the reference plane.

4. The battery pack according to any one of the preceding claims, wherein the first segment 210 and the second segment 220 are formed as an integrated metal member having electrical conductivity.

5. The battery pack according to any one of the preceding claims, wherein the first segment 210 comprises:
a first segment body 211; and
a first segment extending portion 212 comprising a first connection end portion 212a connected to an electrode terminal of a first battery cell 110a and branched from the first segment body 211 toward the first battery cell 110a.

6. The battery pack according to any one of the preceding claims, wherein the second segment 220 comprises:
a second segment body 221 formed to extend from the first segment body 211; and
a second segment extending portion 222 comprising a second connection end portion 222a connected to an electrode terminal of a second battery cell 110b and branched from the second segment body 221 toward the second battery cell 110b.

7. The battery pack according to any one of the preceding claims, wherein each of the battery cells 110 is provided in a cylindrical shape having a predetermined diameter and a predetermined height,
wherein the plurality of battery cells 110 are disposed in a densely packed structure, and wherein the bus bar 200 is formed to extend in a zigzag shape such that the longitudinal direction of the first segment 210 and the longitudinal direction of the second segment 220 intersect each other.

8. The battery pack according to any one of the preceding claims, wherein each of the battery cells 110 comprises a first electrode terminal 111 provided in a central region of an upper surface thereof and a second electrode terminal 112 provided in a remaining region of the upper surface thereof,
wherein the first segment 210 is electrically connected to the first electrode terminal 111 or the second electrode terminal 112 of a first battery cell 110a, and
wherein the second segment 220 is electrically connected to the first electrode terminal 111 or the second electrode terminal 112 of a second battery cell 110b.

9. The battery pack according to any one of the preceding claims, further comprising an adhesive 130 injected and cured around the plurality of battery cells 110.

10. The battery pack according to any one of the preceding claims, wherein at least portions of the first segment 210 and the second segment 220 are disposed and supported inside the adhesive 130.

11. The battery pack according to any one of the preceding claims, wherein spaces for introduction of the adhesive 130 are formed between an installation surface on which the bus bar 200 is arranged and the first segment 210 and the second segment 220.

12. The battery pack according to any one of the preceding claims, wherein a portion of the adhesive 130 is introduced into a first space between the first segment 210 and an installation surface and cured, and
wherein another portion of the adhesive 130 is introduced into a second space between the second segment 220 and the installation surface and cured.

13. The battery pack according to any one of the preceding claims, wherein a cutout portion 230 is provided between the first segment 210 and the second segment 220.

14. The battery pack according to any one of the preceding claims, wherein the cutout portion 230 comprises a notch or slit formed by partially cutting an end portion of the bus bar 200 in a width direction.

15. A bus bar of a battery pack, the bus bar comprising:
a first segment 210 electrically connected to one of a plurality of battery cells 110 and tilted in a first rotational direction about a first tilting axis in a longitudinal direction; and
a second segment 220 electrically connected to another one of the plurality of battery cells 110 and tilted in a second rotational direction different from the first rotational direction about a second tilting axis in the longitudinal direction.
